# EUROPEAN PATENT APPLICATION

(11) **EP 4 787 931 A1**
(43) Date of publication of application: **05.08.2026**
(21) Application number: 24870680.6
(22) Date of filing: 24.09.2024
(51) Int. Cl.: H04W 24/04

(54) **ERROR PROCESSING METHOD AND APPARATUS, AND TERMINAL AND READABLE STORAGE MEDIUM**

(30) Priority: 28.09.2023 CN 202311282208
(71) Applicant: Vivo Mobile Communication Co., Ltd., Dongguan, Guangdong 523863 (CN)
(72) Inventor: WANG, Yangyang, Dongguan, Guangdong 523863 (CN); BAO, Wei, Dongguan, Guangdong 523863 (CN)
(74) Representative: dompatent
(86) International application number: PCT/CN2024/120572
(87) International publication number: WO 2025/067136

(57) **Abstract**

The present application belongs to the technical field of communications. Disclosed are an error processing method and apparatus, and a terminal and a readable storage medium. The error processing method comprises: a terminal receiving an MAC PDU or a PDCCH; when a first MAC CE in a first MAC sub-PDU of the MAC PDU includes first content, executing a first operation, or when the PDCCH bears second content, executing a second operation, wherein the first content or the second content comprises at least one piece of the following: wrong content, unconfigured content, undefined content and invalid content; the first operation comprises at least one of the following: ignoring an action indicated by or associated with the first MAC CE, executing some actions indicated by or associated with the first MAC CE, a discarding operation related to the first MAC sub-PDU, and sending measurement-related information or wrong information to a network-side device; and the second operation comprises at least one of the following: ignoring the action indicated by or associated with the PDCCH, and sending the measurement-related information or wrong information to the network-side device.

## Description

### CROSS-REFERENCE TO RELATED APPLICATIONS

This application claims priority to Chinese Patent Application No. 202311282208.2, filed in China on September 28, 2023, which is incorporated herein by reference in its entirety.

### TECHNICAL FIELD

This application pertains to the field of communication technologies, and specifically relates to an error handling method and apparatus, a terminal, and a readable storage medium.

### BACKGROUND

In a related technology, a medium access control (Medium Access Control, MAC) protocol data unit (Protocol Data Unit, PDU) received by a terminal may include incorrect content, or a received physical downlink control channel (Physical Downlink Control Channel, PDCCH) may carry incorrect content, affecting correct communication of the terminal. In this case, how to handle an error is an urgent problem to be resolved currently.

### SUMMARY

Embodiments of this application provide an error handling method and apparatus, a terminal, and a readable storage medium, to resolve a problem of how to handle an error in a case that a MAC PDU received by the terminal includes incorrect content or a PDCCH received by the terminal carries incorrect content.

According to a first aspect, an error handling method is provided. The method is performed by a terminal, and includes:
receiving, by the terminal, a MAC PDU or a PDCCH;
performing, by the terminal, a first operation in a case that a first MAC CE in a first MAC sub-PDU of the MAC PDU includes first content; or performing a second operation in a case that the PDCCH carries second content, where
the first content includes at least one of the following: incorrect content, unconfigured content, undefined content, and invalid content, and the first operation includes at least one of the following:
   a third operation, where the third operation includes at least one of the following: ignoring a behavior indicated by or associated with the first MAC CE, performing a part of behaviors indicated by or associated with the first MAC CE, and a discarding operation related to the first MAC sub-PDU; and
   sending first information to a network side device, where the first information includes at least one of the following: measurement-related information and error information; and
   the second content includes at least one of the following: incorrect content, unconfigured content, undefined content, and invalid content, and the second operation includes at least one of the following:
      ignoring a behavior indicated by or associated with the PDCCH; and
      sending second information to the network side device, where the second information includes at least one of the following: measurement-related information and error information.

According to a second aspect, an error handling apparatus is provided. The apparatus is applied to a terminal, and includes:
a first receiving module, configured to receive a MAC PDU or a PDCCH; and
an execution module, configured to perform a first operation in a case that a first MAC CE in a first MAC sub-PDU of the MAC PDU includes first content, or perform a second operation in a case that the PDCCH carries second content.

The first content includes at least one of the following: incorrect content, unconfigured content, undefined content, and invalid content. The first operation includes at least one of the following:
a third operation, where the third operation includes at least one of the following: ignoring a behavior indicated by or associated with the first MAC CE, performing a part of behaviors indicated by or associated with the first MAC CE, and a discarding operation related to the first MAC sub-PDU; and
sending first information to a network side device, where the first information includes at least one of the following: measurement-related information and error information.

The second content includes at least one of the following: incorrect content, unconfigured content, undefined content, and invalid content. The second operation includes at least one of the following:
ignoring a behavior indicated by or associated with the PDCCH; and
sending second information to the network side device, where the second information includes at least one of the following: measurement-related information and error information.

According to a third aspect, a terminal is provided, where the terminal includes a processor and a memory. The memory stores a program or instructions capable of running on the processor, and the program or the instructions are executed by the processor to implement the steps of the method according to the first aspect.

According to a fourth aspect, a terminal is provided, including a processor and a communication interface. The communication interface is configured to receive a MAC PDU or a PDCCH. The processor is configured to perform a first operation in a case that a first MAC CE in a first MAC sub-PDU of the MAC PDU includes first content, or perform a second operation in a case that the PDCCH carries second content. The first content includes at least one of the following: incorrect content, unconfigured content, undefined content, and invalid content. The first operation includes at least one of the following: a third operation, where the third operation includes at least one of the following: ignoring a behavior indicated by or associated with the first MAC CE, performing a part of behaviors indicated by or associated with the first MAC CE, and a discarding operation related to the first MAC sub-PDU; and sending first information to a network side device, where the first information includes at least one of the following: measurement-related information and error information. The second content includes at least one of the following: incorrect content, unconfigured content, undefined content, and invalid content. The second operation includes at least one of the following: ignoring a behavior indicated by or associated with the PDCCH; and sending second information to the network side device, where the second information includes at least one of the following: measurement-related information and error information.

According to a fifth aspect, a readable storage medium is provided, the readable storage medium stores a program or instructions, and the program or the instructions are executed by a processor to implement the steps of the method according to the first aspect.

According to a sixth aspect, a wireless communication system is provided, including a terminal and a network side device, where the terminal may be configured to perform the steps of the method according to the first aspect.

According to a seventh aspect, a chip is provided, where the chip includes a processor and a communication interface, the communication interface is coupled to the processor, and the processor is configured to run a program or instructions to implement the steps of the method according to the first aspect.

According to an eighth aspect, a computer program/a program product is provided, where the computer program/the program product is stored in a storage medium, and the computer program/the program product is executed by at least one processor to implement the steps of the method according to the first aspect.

In the embodiments of this application, after receiving the MAC PDU or the PDCCH, the terminal may perform the first operation in a case that the first MAC CE in the first MAC sub-PDU of the MAC PDU includes the first content, or perform the second operation in a case that the PDCCH carries the second content. The first content or the second content includes at least one of the following: incorrect content, unconfigured content, undefined content, and invalid content. The first operation includes at least one of the following: ignoring a behavior indicated by or associated with the first MAC CE, performing a part of behaviors indicated by or associated with the first MAC CE, and the discarding operation related to the first MAC sub-PDU; and sending measurement-related information or error information to the network side device. The second operation includes at least one of the following: ignoring a behavior indicated by or associated with the PDCCH; and sending measurement-related information or error information to the network side device. In this way, the terminal can handle an error in the received MAC PDU or PDCCH, thereby ensuring correct communication of the terminal.

### BRIEF DESCRIPTION OF DRAWINGS

FIG. 1 is a block diagram of a wireless communication system to which an embodiment of this application is applicable;
FIG. 2 is a flowchart of an error handling method according to an embodiment of this application;
FIG. 3 is a schematic diagram of a structure of an error handling apparatus according to an embodiment of this application;
FIG. 4 is a schematic diagram of a structure of a communication device according to an embodiment of this application; and
FIG. 5 is a schematic diagram of a structure of a terminal according to an embodiment of this application.

### DESCRIPTION OF EMBODIMENTS

The following clearly describes technical solutions in embodiments of this application with reference to accompanying drawings in the embodiments of this application. Clearly, the described embodiments are merely some rather than all of the embodiments of this application. All other embodiments obtained by a person of ordinary skill in the art based on the embodiments of this application shall fall within the protection scope of this application.

The terms "first", "second", and the like in this application are used to distinguish between similar objects instead of describing a specified order or sequence. It should be understood that terms used in this way are interchangeable under appropriate circumstances, so that the embodiments of this application can be implemented in a sequence other than that illustrated or described herein. Moreover, the terms "first" and "second" typically distinguish between objects of one category rather than limiting a quantity of objects. For example, there may be one or more first objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

The term "indication" in this application may be either a direct indication (or an explicit indication) or an indirect indication (or an implicit indication). The direct indication may be understood as follows: A sender explicitly notifies, in a sent indication, a receiver of specific information, an operation that needs to be performed, a requested result, or other content. The indirect indication may be understood as: The receiver determines corresponding information based on the indication sent by the sender, or performs determining based on the indication sent by the sender, and determines, based on a determining result, the operation that needs to be performed, the requested result, or the like.

It should be noted that a technology described in the embodiments of this application is not limited to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency-division multiple access (Single-carrier Frequency-Division Multiple Access, SC-FDMA) system, or another system. The terms "system" and "network" are often used interchangeably in the embodiments of this application. The technology described may be used for the systems and radio technologies described above, as well as other systems and radio technologies. The following describes a new radio (New Radio, NR) system for illustrative purposes, and NR terms are used in most of the following descriptions. However, these technologies are also applicable to systems such as a 6th generation (6^{th} Generation, 6G) communication system other than the NR system.

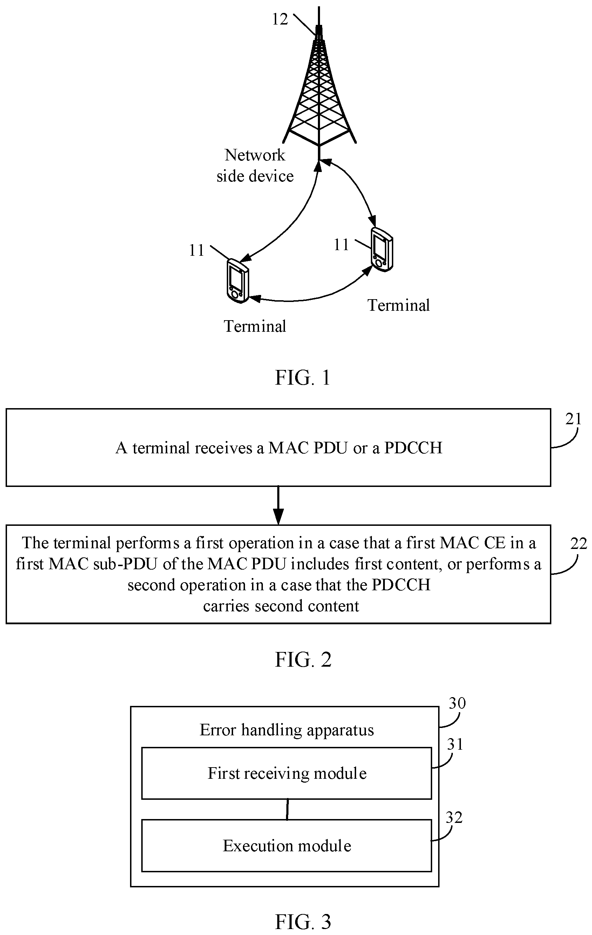

FIG. 1 is a block diagram of a wireless communication system to which an embodiment of this application is applicable. The wireless communication system includes a terminal 11 and a network side device 12. The terminal 11 may be a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile Internet Device, MID), an augmented reality (Augmented Reality, AR)/virtual reality (Virtual Reality, VR) device, a robot, a wearable device (Wearable Device), a flight vehicle (flight vehicle), vehicle user equipment (Vehicle User Equipment, VUE), ship-mounted equipment, pedestrian user equipment (Pedestrian User Equipment, PUE), a smart home (a home device with a wireless communication function, for example, a refrigerator, a television, a laundry machine, or a furniture), a gaming console, a personal computer (Personal Computer, PC), a teller machine, a self-service machine, or another terminal side device. The wearable device includes: a smartwatch, a smart band, a smart headset, smart glasses, smart jewelry (a smart bracelet, a smart wristlet, a smart ring, a smart necklace, a smart anklet, a smart leglet, and the like), a smart wristband, smart clothing, and the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that a specific type of the terminal 11 is not limited in this embodiment of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, WiFi) node, and the like. The base station may be referred to as a node B (Node B, NB), an evolved node B (Evolved Node B, eNB), a next generation node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (Home Node B, HNB), a home evolved node B (home evolved Node B), a transmission reception point (Transmission Reception Point, TRP), or another proper term in the art. The base station is not limited to a specific technical term, provided that the same technical effect is achieved.

With reference to the accompanying drawings, an error handling method and apparatus, a terminal, and a readable storage medium that are provided in the embodiments of this application are described in detail below by using some embodiments and application scenarios thereof.

Referring to FIG. 2, FIG. 2 is a flowchart of an error handling method according to an embodiment of this application. The method is performed by a terminal. As shown in FIG. 2, the method includes the following steps.

Step 21: The terminal receives a MAC PDU or a PDCCH.

Step 22: The terminal performs a first operation in a case that a first MAC CE in a first MAC sub-PDU of the MAC PDU includes first content, or performs a second operation in a case that the PDCCH carries second content.

In this embodiment of this application, the first content includes but is not limited to at least one of the following: incorrect content, unconfigured content, undefined content, and invalid content. The first operation includes but is not limited to at least one of the following:
a third operation, where the third operation includes at least one of the following: ignoring a behavior indicated by or associated with the first MAC control element (Control Element, CE), ignoring a behavior indicated by or associated with the first MAC sub-PDU, performing a part of behaviors indicated by or associated with the first MAC CE, performing a part of behaviors indicated by or associated with the first MAC sub-PDU, and a discarding operation related to the first MAC sub-PDU; and
sending first information to a network side device, where the first information includes at least one of the following: measurement-related information and error information. For example, the measurement-related information includes but is not limited to at least one of the following: a channel quality indicator (Channel Quality Indicator, CQI), a signal to interference plus noise ratio (Signal to Interference plus Noise Ratio, SINR), reference signal received quality (Reference Signal Received Quality, RSRQ), reference signal received power (Reference Signal Receive Power, RSRP), and the like. When the measurement-related information includes measurement-related information of a serving cell or a candidate cell, beam-related measurement information of the serving cell or the candidate cell may be further included.

Optionally, the ignoring a behavior indicated by or associated with the first MAC CE may be understood as not performing the behavior indicated by or associated with the first MAC CE. The ignoring a behavior indicated by or associated with the first MAC sub-PDU may be understood as not performing the behavior indicated by or associated with the first MAC sub-PDU. The performing a part of behaviors indicated by or associated with the first MAC CE may be understood as: performing a behavior indicated by or associated with correct information in the first MAC CE, and not performing a behavior indicated by or associated with incorrect information in the first MAC CE. The performing a part of behaviors indicated by or associated with the first MAC sub-PDU may be understood as: performing a behavior indicated by or associated with correct information in the first MAC sub-PDU, and not performing a behavior indicated by or associated with incorrect information in the first MAC sub-PDU.

Optionally, the performing a part of behaviors indicated by or associated with the first MAC CE may include: a MAC entity of the terminal performs one or more of the following: performing a MAC reset, applying a timing advance indicated in the first MAC CE, or indicating beam information indicated in the first MAC CE to a lower layer (for example, a physical layer). In this case, the MAC entity may first perform the MAC reset. After the MAC reset is performed, if the part of behaviors indicated by or associated with the first MAC CE include applying the timing advance indicated in the first MAC CE, the MAC entity then applies the timing advance indicated in the first MAC CE and starts a timer associated with the timing advance. If the part of behaviors indicated by or associated with the first MAC CE include applying the beam information, the MAC entity indicates the beam information indicated in the first MAC CE to the lower layer.

Optionally, the performing a part of behaviors indicated by or associated with the first MAC sub-PDU may include: the MAC entity of the terminal performs one or more of the following: performing the MAC reset, applying the timing advance indicated in the first MAC CE, or indicating the beam information indicated in the first MAC CE to the lower layer (for example, a physical layer). In this case, the MAC entity may first perform the MAC reset. After the MAC reset is performed, if the part of behaviors indicated by or associated with the first MAC sub-PDU include applying the timing advance indicated in the first MAC CE, the MAC entity then applies the timing advance indicated in the first MAC CE and starts the timer associated with the timing advance. If the part of behaviors indicated by or associated with the first MAC sub-PDU include applying the beam information, the MAC entity indicates the beam information indicated in the first MAC CE to the lower layer (for example, a physical layer).

Optionally, the discarding operation related to the first MAC sub-PDU includes but is not limited to at least one of the following:
discarding at least the first MAC sub-PDU;
discarding at least the first MAC sub-PDU and a sub-PDU located after the first MAC sub-PDU in the MAC PDU; and
discarding the MAC PDU.

Optionally, the first information is used for at least one of the following:
indicating that the terminal receives an incorrect MAC CE;
indicating that the terminal cannot parse the first MAC CE;
indicating that at least one of the first MAC CE, the first MAC sub-PDU, and the MAC PDU includes at least one of the following: incorrect content, unconfigured content, undefined content, and invalid content;
indicating that the terminal cannot correctly parse at least one of the following: the first MAC sub-PDU and the MAC PDU;
requesting for the terminal at least one of the following: a new first MAC CE, a new first MAC sub-PDU, and a new MAC PDU;
indicating that the terminal cannot apply an RRC configuration indicated by or associated with the first MAC CE, or indicating that the terminal does not have an RRC configuration indicated by or associated with the first MAC CE; and
indicating that content carried by the first MAC CE is at least one of the following: incorrect content, unconfigured content, undefined content, and invalid content.

In this embodiment of this application, the second content includes but is not limited to at least one of the following: incorrect content, unconfigured content, undefined content, and invalid content. The second operation includes but is not limited to at least one of the following:
ignoring a behavior indicated by or associated with the PDCCH; and
sending second information to the network side device, where the second information includes at least one of the following: measurement-related information and error information. For example, the measurement-related information includes but is not limited to at least one of the following: a channel quality indicator CQI, a signal to interference plus noise ratio SINR, reference signal received quality RSRQ, reference signal received power RSRP, and the like. When the measurement-related information includes measurement-related information of a serving cell or a candidate cell, beam-related measurement information of the serving cell or the candidate cell may be further included.

Optionally, the second information is used for at least one of the following:
indicating that the terminal cannot parse content carried by the PDCCH;
indicating that the PDCCH carries at least one of the following: incorrect content, unconfigured content, undefined content, and invalid content; and
requesting a new PDCCH for the terminal.

In this way, according to the solution in this embodiment of this application, the terminal can handle an error in the received MAC PDU or PDCCH, thereby ensuring correct communication of the terminal.

In this embodiment of this application, the error in the MAC PDU or the PDCCH may be identified and correspondingly handled by the MAC entity of the terminal, or may be identified and correspondingly handled by a radio resource control (Radio Resource Control, RRC) entity of the terminal. Specifically, when receiving the first MAC sub-PDU, the MAC entity of the terminal determines that the first MAC CE includes the first content. Alternatively, when receiving the first MAC sub-PDU, the MAC entity of the terminal sends content/information in the first MAC CE to the RRC entity, and the RRC entity identifies that the first MAC CE includes the first content. For example, when the first MAC CE is a command related to switching, the MAC entity sends an identifier of a target cell included in the first MAC CE to the RRC entity, and the RRC entity determines whether the identifier of the target cell is known/configured, that is, determines whether the first MAC CE includes incorrect/unconfigured/undefined/invalid content. The MAC entity may be referred to as a MAC layer, and the RRC entity may be referred to as an RRC layer.

Optionally, the performing a first operation may include at least one of the following:
the MAC entity of the terminal performs the third operation; and
the RRC entity of the terminal performs the third operation.

Optionally, in a case that the MAC entity of the terminal performs the third operation, the terminal may receive first indication information. The first indication information is used to instruct the MAC entity of the terminal to perform the third operation in a case that the first MAC CE carries the first content. For example, the terminal may receive the first indication information from the network side device. For another example, the first indication information may be included/carried in an RRC message, a MAC message, or downlink control information (Downlink Control Information, DCI).

Optionally, that the MAC entity of the terminal performs the third operation includes: the MAC entity of the terminal performs the third operation based on the first indication information. In this way, the MAC entity can perform the third operation by using a related instruction.

Optionally, that the MAC entity of the terminal performs the third operation includes: the MAC entity of the terminal performs the third operation based on whether the first MAC CE is from a primary cell group or a primary secondary cell group. For example, if the first MAC CE is from the primary cell group, a part of behaviors indicated by or associated with the first MAC CE may be performed; or if the first MAC CE is from the primary secondary cell group, a behavior indicated by or associated with the first MAC CE or the discarding operation related to the first MAC sub-PDU may be ignored.

Optionally, in a case that the MAC entity of the terminal performs the third operation, the MAC entity of the terminal may receive first acknowledgement information sent by the RRC entity of the terminal, where the first acknowledgement information is determined by the RRC entity by identifying the first content. Then, the MAC entity of the terminal performs the third operation based on the first acknowledgement information. In this way, an error in the MAC PDU can be handled by means of identification for the first content by the RRC entity.

Optionally, in a case that the MAC entity of the terminal performs the third operation based on the first acknowledgement information, the MAC entity of the terminal needs to send content that is in the first MAC CE and that is related to a behavior of the RRC entity to the RRC entity of the terminal, so that the RRC entity identifies the first content, that is, identifies that the first MAC CE carries incorrect, unconfigured, undefined, or invalid content.

Optionally, in a case that the MAC entity of the terminal performs the third operation, before step 21, the MAC entity of the terminal may receive third information associated with the first MAC CE from the RRC entity of the terminal. The third information is used to indicate, to the MAC entity, information that is associated with the first MAC CE and that is stored in the terminal, and the information is, for example, a configuration identifier of a candidate cell in RRC configuration information. In this way, after receiving the first MAC CE, the MAC entity can determine, based on the information associated with the first MAC CE, whether the received first MAC CE is correct.

Optionally, the error handling method in this embodiment further includes:

The MAC entity of the terminal receives second acknowledgement information sent by the RRC entity of the terminal. The second acknowledgement information is obtained by the RRC entity by identifying third content sent by the MAC entity, and is used to indicate that content carried by a second MAC CE in the MAC PDU is correct or instruct the terminal to perform a behavior indicated by or associated with the second MAC CE. The third content is content that is in the second MAC CE and that is related to a behavior of the RRC entity.

The MAC entity of the terminal performs, based on the second acknowledgement information, the behavior indicated by or associated with the second MAC CE.

Optionally, in a case that the MAC entity of the terminal performs, based on the second acknowledgement information, the behavior indicated by or associated with the second MAC CE, the MAC entity of the terminal needs to send content that is carried in the second MAC CE and that is related to a behavior of the RRC entity to the RRC entity of the terminal, so that the RRC entity identifies the third content, that is, identifies that the second MAC CE carries correct information.

In this way, after the RRC entity identifies that the correct second MAC CE is received, the MAC entity performs the behavior indicated by or associated with the second MAC CE.

Optionally, in a case that the second acknowledgement information instructs the terminal to perform the behavior indicated by or associated with the second MAC CE, the second acknowledgement information may be used to instruct the MAC entity to perform one or more of the following: performing a MAC reset, applying a timing advance indicated in the second MAC CE, or indicating beam information indicated in the second MAC CE to a lower layer (for example, a physical layer). For example, in a case that the MAC entity receives the second acknowledgement information, the MAC entity may first perform the MAC reset. After the MAC reset is performed, if the second MAC CE includes the timing advance, the timing advance indicated in the second MAC CE is applied, and a timer associated with the timing advance is started. If the second MAC CE includes the beam information, the beam information indicated in the second MAC CE is indicated to the lower layer (for example, a physical layer).

Optionally, the performing, based on the second acknowledgement information, the behavior indicated by or associated with the second MAC CE includes:
the MAC entity of the terminal performs one or more of the following: performing the MAC reset, applying the timing advance indicated in the second MAC CE, or indicating the beam information indicated in the second MAC CE to the lower layer.

Optionally, in a case that the MAC entity of the terminal performs the third operation, the MAC entity of the terminal may send indication information to the RRC entity of the terminal, to instruct the RRC entity to send the first information to the network side device.

Optionally, in a case that the RRC entity of the terminal performs the third operation, the RRC entity of the terminal may send the first acknowledgement information to the MAC entity of the terminal. The first acknowledgement information is determined by the RRC entity by identifying the first content and is used to assist the MAC entity in performing the third operation. In this way, an error in the MAC PDU can be handled by means of identification for the first content by the RRC entity.

Optionally, the first acknowledgement information may be used for at least one of the following:
indicating that the first content is at least one of the following: incorrect content, partially incorrect content, unconfigured content, undefined content, and invalid content; and
instructing the MAC entity to perform at least one of the following: ignoring a behavior indicated by or associated with the first MAC CE, and performing a part of behaviors indicated by or associated with the first MAC CE.

Optionally, in a case that the RRC entity of the terminal performs the third operation, the terminal may receive second indication information. The second indication information is used to instruct the RRC entity of the terminal to perform the third operation in a case that the first MAC CE carries the first content. For example, the terminal may receive the second indication information from the network side device.

Optionally, that the RRC entity of the terminal performs the third operation includes: the RRC entity of the terminal performs the third operation based on the second indication information. In this way, the RRC entity can perform the third operation by using a related instruction.

Optionally, that the RRC entity of the terminal performs the third operation includes: the RRC entity of the terminal performs the third operation based on whether the first MAC CE is from a primary cell group or a primary secondary cell group. For example, if the first MAC CE is from the primary cell group, a part of behaviors indicated by or associated with the first MAC CE or the discarding operation related to the first MAC sub-PDU may be performed; or if the first MAC CE is from the primary secondary cell group, a behavior indicated by or associated with the first MAC CE or the discarding operation related to the first MAC sub-PDU may be ignored.

Optionally, that the terminal performs the first operation may further include:
in a case that the terminal is in a dual-connected state, and the first MAC CE is from a secondary cell group, the terminal ignores the behavior indicated by or associated with the first MAC CE, and reports configuration error information of the secondary cell group to a network side device of a serving cell.

Optionally, in a case that the RRC entity of the terminal performs the first operation, the error handling method in this embodiment further includes at least one of the following:
(1) the terminal continues to use an RRC configuration received before receiving the first MAC CE, and performs at least one of the following: RRC connection re-establishment, RRC connection resume, fast recovery of layer 1/layer 2 triggered cell switching, and falling back to an RRC idle state RRC_IDLE; and
(2) the terminal reports configuration error information of a secondary cell group to a network side device of a serving cell after ignoring the behavior indicated by or associated with the first MAC CE.

Optionally, the sending the first information to the network side device may include any one of the following:
(1) the terminal sends the first information to a network side device of a serving cell in which the terminal is located, so that the network side learns that the terminal receives a MAC PDU that carries incorrect content; and
(2) after RRC connection re-establishment or fast recovery of layer 1/layer 2 triggered cell switching, the terminal sends the first information to a network side device of a new serving cell, so that the network side learns that the terminal receives a MAC PDU that carries incorrect content.

Optionally, for a case that the first MAC CE includes incorrect, unconfigured, undefined, or invalid content, the error handling method in this embodiment may further include:
the terminal sends third indication information to the network side device, where the third indication information is used to indicate that the first information is available to the terminal; and
the terminal receives a first request message sent by the network side device, where the first request message is used to request the terminal to send the first information.

In this way, the terminal can send the first information only based on a network side request, thereby avoiding a resource waste.

Optionally, for a case that the PDCCH carries incorrect, unconfigured, undefined, or invalid content, the error handling method in this embodiment may further include:
the terminal sends fourth indication information to the network side device, where the fourth indication information is used to indicate that the second information is available to the terminal; and
the terminal receives a second request message sent by the network side device, where the second request message is used to request the terminal to send the second information.

In this way, the terminal can send the second information only based on a network side request, thereby avoiding a resource waste.

The following describes this application with reference to specific embodiments.

### Embodiment 1

In Embodiment 1, content included in a MAC CE is incorrect/unknown/unconfigured/undefined/invalid, and a MAC entity (or referred to as a MAC layer) identifies error information. A specific error handling process includes the following steps.

Step 1: UE receives an RRC reconfiguration message, where the RRC reconfiguration message includes first configuration information of the UE.

Step 2: The UE stores the first configuration information, and sends an RRC reconfiguration complete message to a network side device corresponding to a serving cell, for example, a base station.

Step 3: The UE maintains the stored first configuration information, that is, modifies, adds, or deletes the stored first configuration information based on the RRC reconfiguration message sent by a network side; and an RRC entity of the UE sends third information (for example, RRC configuration information) included in the first configuration information to a MAC entity, where the third information is information associated with a first MAC CE, and in a case that the third information changes, the RRC entity needs to notify the MAC entity of an update.

Step 4: The UE receives a MAC PDU sent by the network side, where the MAC PDU includes one or more MAC sub-PDUs, the MAC PDU includes a first MAC sub-PDU, and the first MAC sub-PDU includes the first MAC CE.

Step 5: The UE determines that the first MAC sub-PDU includes incorrect/unconfigured/undefined/invalid content, where for example, the first MAC CE is related to the first configuration information, and the UE determines, based on the third information, that content indicated by or associated with the first MAC CE is unconfigured; and a behavior of the UE includes at least one of the following:
(a) Behavior 1, including at least one of the following:
   - the UE ignores a behavior indicated by or associated with the first MAC CE/first MAC sub-PDU, that is, the UE does not perform the behavior indicated by or associated with the first MAC CE/first MAC sub-PDU;
   - the UE performs a part of behaviors indicated by or associated with the first MAC CE/first MAC sub-PDU, that is, performs a behavior indicated by or associated with correct information in the first MAC CE/first MAC sub-PDU, and does not perform a behavior indicated by or associated with incorrect information;
   - the UE performs, based on first indication information, any one of the following behaviors:
      ① ignoring a behavior indicated by or associated with the first MAC CE/first MAC sub-PDU, that is, not performing the behavior indicated by or associated with the first MAC CE/first MAC sub-PDU;
      ② performing a part of behaviors indicated by or associated with the first MAC CE/first MAC sub-PDU, that is, performing a behavior indicated by or associated with correct information in the first MAC CE/first MAC sub-PDU, and not performing a behavior indicated by or associated with incorrect information; and
      ③ reporting error information to the RRC entity by using the MAC entity; or
   - the UE performs any one of the behaviors ① to ③ described above based on whether the first MAC CE is from a primary cell (PCell) or a primary secondary cell (PScell).
      Optionally, the first indication information is information received by the UE before receiving a MAC PDU associated with the first MAC CE/first MAC sub-PDU, for example, the first indication information may be included/carried in an RRC message, a MAC message, or DCI.
(b) Behavior 2, including at least one of the following:
   - the UE does not discard the first MAC sub-PDU or an associated MAC PDU;
   - the MAC entity of the UE discards the first MAC sub-PDU;
   - the MAC entity of the UE discards the first MAC sub-PDU and a remaining sub-PDU located after the first MAC sub-PDU in a MAC PDU corresponding to the first MAC sub-PDU;

   - the MAC entity of the UE discards at least the first MAC sub-PDU;
   - the MAC entity of the UE discards at least the first MAC sub-PDU and a remaining sub-PDU located after the first MAC sub-PDU in a MAC PDU corresponding to the first MAC sub-PDU; and
   - the MAC entity of the UE discards a MAC PDU corresponding to the first MAC sub-PDU.
(c) Behavior 3, where the UE sends a first message to the network side device of the serving cell, the first message carries first information, and the first information is used for at least one of the following:
   - indicating that the UE cannot parse the first MAC CE, or indicating that the first MAC CE received by the UE includes unconfigured/undefined/incorrect/invalid content;
   - indicating that the UE cannot correctly parse the first MAC sub-PDU or the MAC PDU, or indicating that the first MAC sub-PDU/MAC PDU includes unconfigured/undefined/incorrect/invalid content;
   - requesting to send a new first MAC CE/first MAC sub-PDU/MAC PDU for the UE; and
   - indicating that content included in the first MAC CE is incorrect/unknown/unconfigured/undefined/invalid.

Optionally, the first message may be a MAC message, an RRC message, or a PDCCH message.

Optionally, the first message may be sent by the MAC entity of the UE, or may be sent by the RRC entity after the RRC entity receives an indication from the MAC entity.

Optionally, for the foregoing behavior 3, the UE may further send third indication information to the network side device of the serving cell, where the third indication information is used to indicate that the first information is available to the UE, and the first information may be measurement-related information or error information. Then, the UE receives a request message from the network side device of the serving cell, where the request message is used to request the UE to send the first information. Then, the UE sends the first message.

### Embodiment 2

In Embodiment 2, content included in a MAC CE is incorrect/unknown/unconfigured/undefined/invalid, and an RRC entity (or referred to as an RRC layer) identifies error information. A specific error handling process includes the following steps.

Step 1: UE receives an RRC reconfiguration message, where the RRC reconfiguration message includes first configuration information of the UE.

Step 2: The UE stores the first configuration information, and sends an RRC reconfiguration complete message to a network side device corresponding to a serving cell, for example, a base station.

Step 3: The UE maintains the stored first configuration information, that is, modifies, adds, or deletes the stored first configuration information based on the RRC reconfiguration message sent by a network side.

Step 4: The UE receives a MAC PDU sent by the network side, where the MAC PDU includes one or more MAC sub-PDUs, the MAC PDU includes a first MAC sub-PDU, and the first MAC sub-PDU includes a first MAC CE.

Step 5: When receiving the first MAC CE, a MAC entity of the UE does not perform a behavior that is indicated by the first MAC CE and that is related to the MAC entity, until acknowledgement information from an RRC entity of the UE is received.

A behavior (for example, a behavior 4) of the UE is specifically as follows:
- if the acknowledgement information indicates that content indicated by or associated with the first MAC CE is correct, or instructs the MAC entity to start to perform a related behavior, the MAC entity of the UE then starts to perform a behavior indicated by or associated with the first MAC CE; or
- if the acknowledgement information indicates that content indicated by or associated with the first MAC CE is incorrect or partially incorrect, or instructs the MAC entity to perform a part of behaviors related to the first MAC CE, or instructs not to perform a part of behaviors related to the first MAC CE, or instructs to ignore some or all of content in the first MAC CE, the MAC entity of the UE performs a related behavior based on the acknowledgement information, including not performing a behavior indicated by or associated with the first MAC CE, or performing a part of behaviors; and performs any one of the following behaviors:
- not discarding the first MAC sub-PDU or an associated MAC PDU;
- discarding the first MAC sub-PDU;
- discarding the first MAC sub-PDU and a remaining sub-PDU located after the first MAC sub-PDU in a MAC PDU corresponding to the first MAC sub-PDU;
- discarding at least the first MAC sub-PDU;
- discarding at least the first MAC sub-PDU and a remaining sub-PDU located after the first MAC sub-PDU in a MAC PDU corresponding to the first MAC sub-PDU; and
- discarding a MAC PDU corresponding to the first MAC sub-PDU.

Optionally, if the acknowledgement information from the RRC entity is not received, the MAC entity of the UE may ignore a behavior indicated by or associated with the first MAC CE, or perform a behavior indicated by or associated with the first MAC CE.

Step 6: The MAC entity of the UE sends fourth information to the RRC entity of the UE, where the fourth information includes content included in the first MAC CE; and the RRC entity of the UE determines that content indicated by or associated with the first MAC CE is incorrect/unconfigured/undefined/invalid; and a behavior of the UE includes one or more of the following:

(d) Behavior 5, where the RRC entity of the UE performs any one of the following behaviors:
- ignoring content indicated by the first MAC CE, that is, ignoring/not performing a behavior indicated by or associated with the first MAC CE, where optionally, the RRC entity of the UE sends first acknowledgement information to the MAC entity of the UE, to indicate that the content in the first MAC CE is incorrect, or instruct not to perform all behaviors indicated by or associated with the first MAC CE;
- performing a part of behaviors indicated by or associated with the first MAC CE or the first MAC sub-PDU, that is, performing a behavior indicated by/associated with correct information in the first MAC CE or the first MAC sub-PDU, and not performing a behavior indicated by/associated with incorrect information, where optionally, the RRC entity of the UE sends the first acknowledgement information to the MAC entity to instruct to perform a part of behaviors related to the first MAC CE, or instruct not to perform a part of behaviors related to the first MAC CE, or instruct to ignore some content in the first MAC CE;
- determining, based on second indication information, whether to ignore the first MAC CE/first MAC sub-PDU or perform a part of behaviors indicated by or associated with the first MAC CE/first MAC sub-PDU, and indicating, to the MAC entity of the UE based on the second indication information, any one of the following:
   - ignoring the first MAC CE, that is, not performing a behavior indicated by or associated with the first MAC CE;
   - performing a part of behaviors related to the first MAC CE, or not performing a part of behaviors related to the first MAC CE, or ignoring some content in the first MAC CE, where
      optionally, the second indication information is information received by the UE before receiving the MAC PDU associated with the first MAC CE/first MAC sub-PDU, for example, may be included/carried in an RRC message, a MAC message, or DCI; and
   - determining, based on whether the first MAC CE is from a primary cell (PCell) or a primary secondary cell (PScell), whether to ignore the first MAC CE/first MAC sub-PDU or to perform a part of behaviors indicated by/associated with the first MAC CE/first MAC sub-PDU.

(e) Behavior 6, where the UE sends a second message to the network side device of the serving cell, the second message carries first information, and the first information is used for at least one of the following:
- indicating that the UE receives an incorrect MAC CE;
- indicating that the UE cannot correctly parse the first MAC sub-PDU/MAC PDU, or indicating that the first MAC sub-PDU/MAC PDU includes unconfigured/undefined/incorrect/invalid content;
- requesting to send a new first MAC CE/first MAC sub-PDU/MAC PDU for the UE;
- indicating that the UE cannot apply RRC configuration information associated with the first MAC CE, or indicating that the UE does not have specified RRC configuration information; and
- indicating that content included in the first MAC CE is incorrect/unknown/unconfigured/undefined/invalid.

Optionally, the second message may be a MAC message, an RRC message, or a PDCCH message.

Optionally, for the foregoing behavior 6, the UE may further send third indication information to the network side device of the serving cell, where the third indication information is used to indicate that the first information is available to the UE, and the first information may be measurement-related information or error information. Then, the UE receives a request message from the network side device of the serving cell, where the request message is used to request the UE to send the first information. Then, the UE sends the second message.

(f) Behavior 7, including any one of the following:
- if the UE is in a dual-connected state and the first MAC CE is from a secondary cell group, the UE ignores the behavior indicated by or associated with the first MAC CE, and performs a secondary cell group (Secondary Cell Group, SCG) failure procedure, to report an SCG configuration error;
- if the first MAC CE is from a primary cell group, the UE continues to use an RRC configuration received before receiving the first MAC CE; if access stratum security of the UE is activated and there is currently at least one data radio bearer (Data Radio Bearer, DRB) and a signaling radio bearer (Signaling Radio Bearer, SRB), for example, an SRB 2, the UE performs RRC connection re-establishment, RRC connection resume, or fast recovery of layer 1/layer 2 triggered cell switching; or otherwise, the UE performs a current behavior of returning to RRC_IDLE; and the UE sends the first information to a new serving cell after performing RRC connection re-establishment or fast recovery of layer 1/layer 2 triggered cell switching; and
- the UE performs RRC connection re-establishment or fast recovery of layer 1/layer 2 triggered mobility (L1/L2 Triggered Mobility, LTM), where optionally, after performing RRC connection re-establishment or fast recovery of layer 1/layer 2 triggered cell switching, the UE sends the first information to a new serving cell.

### Embodiment 3

In Embodiment 3, an LTM cell switch command includes an unconfigured/incorrect/invalid field, and a MAC entity identifies an error. A specific error handling process includes the following steps.

Step 1: UE receives an RRC reconfiguration message, where the RRC reconfiguration message includes LTM candidate cell configuration information of the UE, and the LTM candidate cell configuration information corresponds to one or more candidate cells.

Step 2: The UE stores the LTM candidate cell configuration information, and sends an RRC reconfiguration complete message to a network side device corresponding to a serving cell, for example, a base station.

Step 3: The UE maintains the stored LTM candidate cell configuration information, that is, modifies, adds, or deletes the stored LTM candidate cell configuration information based on the RRC reconfiguration message sent by a network side; and an RRC entity of the UE sends third information to a MAC entity, where the third information includes one or more of the following:
- a configuration identifier of a candidate cell; or
- beam-related information.

Step 4: The UE receives a switch command, for example, an LTM cell switch command, sent by the network side, where the switch command includes one or more of the following content:
- an identifier of a target cell, such as a candidate configuration identifier;
- timing advance command information;
- beam-related information, such as a transmission configuration indicator state identifier (for example, an uplink transmission configuration indicator state identifier); or
- contention-free random access resource information, such as random access preamble information, random access occasion information, and a synchronization signal block (Synchronization Signal Block, SSB) index.

Step 5: The MAC entity of the UE determines that the switch command includes incorrect/unconfigured/undefined/invalid content, for example, in the following cases:
Case 1: The LTM candidate cell configuration information stored in the UE corresponds to a cell #0, a cell #1, and a cell #2. However, the identifier of the target cell included in the switch command is associated with a cell #4. In this case, the UE considers that an incorrect switch command is received, and a behavior of the UE includes one or more of the following:
Behavior 1.1: The UE ignores the switch command, that is, does not perform a behavior indicated by or associated with the switch command, including: the MAC entity of the UE does not indicate to the RRC entity that the switch command is received; the UE does not perform switching; the MAC entity of the UE does not perform a reset; an RRC layer of the UE does not apply RRC configuration information of the target cell; and the like.
Behavior 1.2, including any one of the following:
   - the MAC entity of the UE discards a sub-PDU in which a MAC CE corresponding to the switch command is located;
   - the MAC entity of the UE discards a sub-PDU in which a MAC CE corresponding to the switch command is located and a remaining sub-PDU that is located after the MAC CE in a MAC PDU corresponding to the sub-PDU; and
   - the MAC entity of the UE discards a MAC PDU corresponding to the switch command.
Behavior 1.3: The UE sends a first message to the network side device of the serving cell, where the first message carries error information, and the error information is used for any one of the following:
   - indicating that the UE cannot parse a previous switch command, or indicating that the switch command received by the UE includes unconfigured/undefined/incorrect/invalid content;
   - indicating that the UE cannot correctly parse the MAC PDU/MAC sub-PDU/MAC CE associated with the switch command;
   - requesting to send a new MAC CE for the UE; and
   - requesting to send a new switch command for the UE.

Optionally, the first message may be a MAC message, an RRC message, or a PDCCH message.

Case 2: The LTM candidate cell configuration information stored in the UE corresponds to a cell #0, a cell #1, and a cell #2, and the identifier of the target cell included in the switch command is associated with the cell #0. In this case, the UE considers that the cell #0 can be switched to. However, a transmission configuration indicator (Transmission Configuration Indicator, TCI) state identifier (state Id) associated with a candidate cell configuration that is in the LTM candidate cell configuration information stored in the UE and that is corresponding to the cell #0 includes a TCI state Id #0, a TCI state Id #1, and a TCI state Id #2, while a TCI state Id in the switch command is a TCI state Id #3. In this case, a behavior of the UE includes one or more of the following:
Behavior 2.1, including any one of the following:
   - ignoring the switch command, that is, not performing a behavior related to the switch command, including: the MAC entity of the UE does not indicate to the RRC entity that the switch command is received;
   - performing the switch command, but ignoring incorrect information in the switch command, where for example, the UE does not apply a beam indicated in the switch command, but the UE executes other correct signaling, including: a MAC layer indicates the identifier of the target cell to the RRC layer, and the RRC layer applies a configuration of the target cell; and the MAC layer of the UE first performs a MAC reset, and after the MAC reset is performed, if the switch command includes information related to a timing advance, the MAC applies the timing advance and starts a related timer; and
   - determining, based on first indication information, whether to ignore the switch command or to execute the switch command but ignore incorrect information. Optionally, the first indication information is information received by the UE before receiving the switch command, for example, may be included/carried in an RRC message, a MAC message, or DCI.
Behavior 2.2 is the same as the foregoing behavior 1.2.
Behavior 2.3 is the same as the foregoing behavior 1.3.

### Embodiment 4

In Embodiment 4, an LTM cell switch command includes an unconfigured/incorrect/invalid field, and an RRC entity identifies an error. A specific error handling process includes the following steps.

Step 1: UE receives an RRC reconfiguration message, where the RRC reconfiguration message includes LTM candidate cell configuration information of the UE, and the LTM candidate cell configuration information corresponds to one or more candidate cells.

Step 2: The UE stores the LTM candidate cell configuration information, and sends an RRC reconfiguration complete message to a network side device corresponding to a serving cell, for example, a base station.

Step 3: The UE maintains the stored LTM candidate cell configuration information, that is, modifies, adds, or deletes the stored LTM candidate cell configuration information based on the RRC reconfiguration message sent by a network side.

Step 4: The UE receives a switch command, for example, an LTM cell switch command, sent by the network side, where the switch command includes one or more of the following content:
- an identifier of a target cell, such as a candidate configuration identifier;
- timing advance command information;
- beam-related information, such as a transmission configuration indicator state identifier (for example, an uplink transmission configuration indicator state identifier); or
- contention-free random access resource information, such as random access preamble information, random access occasion information, and an SSB index.

Step 5: A MAC entity of the UE sends fifth information to an RRC entity of the UE, where the fifth information includes one or more of the following:
- the UE receiving the LTM cell switch command;
- the identifier of the target cell indicated in the LTM cell switch command; or
- the beam-related information indicated in the LTM cell switch command.

Behavior 4.1 of the UE: The MAC entity of the UE does not perform a behavior indicated by the LTM cell switch command, for example, a MAC reset (reset), and does not indicate beam-related information to a lower layer, until acknowledgement information from the RRC entity of the UE is received.

Step 6: The RRC entity of the UE determines that the switch command includes incorrect/unconfigured/undefined/invalid content, for example, in the following cases:
Case 1: The LTM candidate cell configuration information stored in the UE corresponds to a cell #0, a cell #1, and a cell #2. However, the identifier of the target cell included in the switch command is associated with a cell #4. In this case, the RRC entity of the UE considers that an incorrect switch command is received, and a behavior of the UE includes one or more of the following:
Behavior 5.1: The RRC entity of the UE performs the following behavior: ignoring an LTM cell switch command MAC CE, that is, not performing a behavior indicated by or associated with the switch command, where optionally, the RRC entity of the UE sends acknowledgement information to the MAC entity of the UE, to instruct not to perform the switch command.
Behavior 6.1: The UE sends a second message to the network side device of the serving cell, the second message carries first information, and the first information is used for at least one of the following:
   - indicating that the UE cannot parse a previous switch command, or indicating that the switch command received by the UE includes unconfigured/undefined/incorrect/invalid content;
   - indicating that the UE cannot correctly parse the MAC PDU/MAC sub-PDU/MAC CE associated with the switch command;
   - requesting to send a new MAC CE for the UE; and
   - requesting to send a new switch command for the UE.

Optionally, the second message may be a MAC message, an RRC message, or a PDCCH message.

Behavior 7.1, including at least one of the following:
- if the UE is in a dual-connected state and the LTM cell switch command MAC CE is from a secondary cell group, the UE ignores the switch command and performs an SCG failure information procedure to report an SCG configuration error;
- if the LTM cell switch command MAC CE is from a primary cell group, the UE continues to use an RRC configuration received before receiving the LTM cell switch command MAC CE; if access stratum security of the UE is activated and there is currently at least one DRB and an SRB 2, the UE performs RRC connection re-establishment, RRC connection resume, or fast recovery of layer 1/layer 2 triggered cell switching; or otherwise, the UE performs a current behavior of returning to RRC_IDLE; and the UE sends the first information to a new serving cell after performing RRC connection re-establishment or fast recovery of layer 1/layer 2 triggered cell switching; and
- the UE performs RRC connection re-establishment or LTM fast recovery, where optionally, after performing RRC connection re-establishment or fast recovery of layer 1/layer 2 triggered cell switching, the UE sends the first information to a new serving cell.

### Embodiment 5

In Embodiment 5, content included in a PDCCH order is incorrect/unknown/unconfigured/undefined/invalid. A MAC entity (or referred to as a MAC layer) identifies error information. A specific error handling process includes the following steps.

Step 1: UE receives an RRC reconfiguration message, where the RRC reconfiguration message includes first configuration information of the UE.

Step 2: The UE stores the first configuration information, and sends an RRC reconfiguration complete message to a network side device corresponding to a serving cell, for example, a base station.

Step 3: The UE maintains the stored first configuration information, that is, modifies, adds, or deletes the stored first configuration information based on the RRC reconfiguration message sent by a network side; and an RRC entity of the UE sends third information included in the first configuration information to a MAC entity, where the third information is information associated with a first PDCCH, and in a case that the third information changes, the RRC entity needs to notify the MAC entity of an update.

Optionally, the first PDCCH includes a PDCCH used to trigger early acquisition of a timing advance (Timing Advance, TA) for a candidate cell, that is, a PDCCH used to trigger early TA acquisition. The third information includes, for example, an available cell indicator value or a maximum value of a cell indicator.

Step 4: The UE receives the first PDCCH sent by the network side, and indicates the first PDCCH to the MAC entity.

Step 5: The UE determines that the first PDCCH includes incorrect/unconfigured/undefined/invalid content, where a behavior of the UE includes one or more of the following:
(A) the UE ignores a behavior indicated by or associated with the first PDCCH, where for example, the UE does not perform a procedure for early TA acquisition of a candidate cell; or
(B) the UE sends a third message to the network side device of the serving cell, where the third message carries second information, and the second information is used for at least one of the following:
   - indicating that the UE cannot parse content in the first PDCCH;
   - indicating that the first PDCCH includes incorrect/unconfigured/undefined/invalid content; and
   - requesting to send a new first PDCCH for the UE.

Optionally, the third message may be a message of the MAC entity, a message of the RRC entity, or a PDCCH message.

Optionally, before sending the third message, the UE may further send fourth indication information to the network side device of the serving cell, where the fourth indication information is used to indicate that the second information is available to the UE, and the second information may be measurement-related information or error information. Then, the UE receives a request message from the network side device of the serving cell, where the request message is used to request the UE to send the second information. Then, the UE sends the third message.

The error handling method provided in the embodiments of this application may be performed by an error handling apparatus. The error handling apparatus provided in the embodiments of this application is described by using an example in which the error handling apparatus performs the error handling method in the embodiments of this application.

Referring to FIG. 3, FIG. 3 is a schematic diagram of a structure of an error handling apparatus according to an embodiment of this application. The apparatus is applied to a terminal. As shown in FIG. 3, the error handling apparatus 30 includes:
a first receiving module 31, configured to receive a MAC PDU or a PDCCH; and
an execution module 32, configured to perform a first operation in a case that a first MAC CE in a first MAC sub-PDU of the MAC PDU includes first content, or perform a second operation in a case that the PDCCH carries second content.

The first content includes at least one of the following: incorrect content, unconfigured content, undefined content, and invalid content. The first operation includes at least one of the following: a third operation, where the third operation includes at least one of the following: ignoring a behavior indicated by or associated with the first MAC CE, performing a part of behaviors indicated by or associated with the first MAC CE, and a discarding operation related to the first MAC sub-PDU; and sending first information to a network side device, where the first information includes at least one of the following: measurement-related information and error information.

The second content includes at least one of the following: incorrect content, unconfigured content, undefined content, and invalid content. The second operation includes at least one of the following: ignoring a behavior indicated by or associated with the PDCCH; and sending second information to the network side device, where the second information includes at least one of the following: measurement-related information and error information.

Optionally, the execution module 32 is specifically configured for a MAC entity of the terminal to perform the third operation, or for an RRC entity of the terminal to perform the third operation.

Optionally, the error handling apparatus 30 further includes:
a second receiving module, configured to receive first indication information. The first indication information is used to instruct the MAC entity of the terminal to perform the third operation in a case that the first MAC CE carries the first content.

The execution module 32 is specifically configured for the MAC entity of the terminal to perform the third operation based on the first indication information.

Optionally, the execution module 32 is specifically configured for the MAC entity of the terminal to perform the third operation based on whether the first MAC CE is from a primary cell group or a primary secondary cell group.

Optionally, the error handling apparatus 30 further includes:
a third receiving module, configured for the MAC entity of the terminal to receive first acknowledgement information sent by the RRC entity of the terminal, where the first acknowledgement information is determined by the RRC entity by identifying the first content.

Optionally, the execution module 32 is specifically configured for the MAC entity of the terminal to perform the third operation based on the first acknowledgement information.

Optionally, the error handling apparatus 30 further includes:
a first sending module, configured for the MAC entity of the terminal to send content that is in the first MAC CE and that is related to a behavior of the RRC entity to the RRC entity of the terminal.

Optionally, in a case that the MAC entity of the terminal performs the third operation, the error handling apparatus 30 further includes:
a fourth receiving module, configured for the MAC entity of the terminal to receive third information associated with the first MAC CE from the RRC entity of the terminal, where the third information is used to indicate, to the MAC entity, information that is associated with the first MAC CE and that is stored in the terminal.

Optionally, the first receiving module 31 is further configured for the MAC entity of the terminal to receive second acknowledgement information sent by the RRC entity of the terminal. The second acknowledgement information is obtained by the RRC entity by identifying third content sent by the MAC entity, and is used to indicate that content carried by a second MAC CE in the MAC PDU is correct or instruct the terminal to perform a behavior indicated by or associated with the second MAC CE. The third content is content that is in the second MAC CE and that is related to a behavior of the RRC entity.

The execution module 32 is further configured for the MAC entity of the terminal to perform, based on the second acknowledgement information, the behavior indicated by or associated with the second MAC CE.

Optionally, in a case that the second acknowledgement information instructs the terminal to perform the behavior indicated by or associated with the second MAC CE, the second acknowledgement information is used to instruct the MAC entity to perform one or more of the following: performing a MAC reset, applying a timing advance indicated in the second MAC CE, or indicating beam information indicated in the second MAC CE to a lower layer.

Optionally, the execution module 32 is further configured for the MAC entity to perform one or more of the following: performing the MAC reset, applying the timing advance indicated in the second MAC CE, or indicating the beam information indicated in the second MAC CE to the lower layer.

Optionally, in a case that the RRC entity of the terminal performs the third operation, the error handling apparatus 30 further includes:
a second sending module, configured for the RRC entity of the terminal to send the first acknowledgement information to the MAC entity of the terminal, where the first acknowledgement information is determined by the RRC entity by identifying the first content, and is used to assist the MAC entity in performing the third operation.

Optionally, the first acknowledgement information is used for at least one of the following:
indicating that the first content is at least one of the following: incorrect content, partially incorrect content, unconfigured content, undefined content, and invalid content; and
instructing the MAC entity to perform at least one of the following: ignoring a behavior indicated by or associated with the first MAC CE, and performing a part of behaviors indicated by or associated with the first MAC CE.

Optionally, the error handling apparatus 30 further includes:
a fifth receiving module, configured to receive second indication information, where the second indication information is used to instruct the RRC entity of the terminal to perform the third operation in a case that the first MAC CE carries the first content.

The execution module 32 is specifically configured for the RRC entity of the terminal to perform the third operation based on the second indication information.

Optionally, the execution module 32 is specifically configured for the RRC entity of the terminal to perform the third operation based on whether the first MAC CE is from a primary cell group or a primary secondary cell group.

Optionally, the execution module 32 is further configured to: in a case that the terminal is in a dual-connected state, and the first MAC CE is from a secondary cell group, ignore the behavior indicated by or associated with the first MAC CE, and report configuration error information of the secondary cell group to a network side device of a serving cell.

Optionally, in a case that the RRC entity of the terminal performs the first operation, the execution module 32 is further configured to perform at least one of the following:
continuing to use an RRC configuration received before the first MAC CE is received, and performing at least one of the following: RRC connection re-establishment, RRC connection resume, fast recovery of layer 1/layer 2 triggered cell switching, and falling back to an RRC idle state; and
reporting the configuration error information of the secondary cell group to the network side device of the serving cell after ignoring the behavior indicated by or associated with the first MAC CE.

Optionally, the sending the first information to the network side device may include any one of the following:
sending the first information to a network side device of a serving cell in which the terminal is located; and
sending the first information to a network side device of a new serving cell after RRC connection re-establishment or fast recovery of layer 1/layer 2 triggered cell switching.

Optionally, the discarding operation related to the first MAC sub-PDU includes at least one of the following:
discarding at least the first MAC sub-PDU;
discarding at least the first MAC sub-PDU and a sub-PDU located after the first MAC sub-PDU in the MAC PDU; and
discarding the MAC PDU.

Optionally, the first information is used for at least one of the following:
indicating that the terminal receives an incorrect MAC CE;
indicating that the terminal cannot parse the first MAC CE;
indicating that at least one of the first MAC CE, the first MAC sub-PDU, and the MAC PDU includes at least one of the following: incorrect content, unconfigured content, undefined content, and invalid content;
indicating that the terminal cannot correctly parse at least one of the following: the first MAC sub-PDU and the MAC PDU;
requesting for the terminal at least one of the following: a new first MAC CE, a new first MAC sub-PDU, and a new MAC PDU;
indicating that the terminal cannot apply an RRC configuration indicated by or associated with the first MAC CE, or indicating that the terminal does not have an RRC configuration indicated by or associated with the first MAC CE; and
indicating that content carried by the first MAC CE is at least one of the following: incorrect content, unconfigured content, undefined content, and invalid content.

Optionally, the error handling apparatus 30 further includes:
a third sending module, configured to send third indication information to the network side device, where the third indication information is used to indicate that the first information is available to the terminal; and
a sixth receiving module, configured to receive a first request message sent by the network side device, where the first request message is used to request the terminal to send the first information.

Optionally, the second information is used for at least one of the following:
indicating that the terminal cannot parse content carried by the PDCCH;
indicating that the PDCCH carries at least one of the following: incorrect content, unconfigured content, undefined content, and invalid content; and
requesting a new PDCCH for the terminal.

Optionally, the error handling apparatus 30 further includes:
a fourth sending module, configured to send fourth indication information to the network side device, where the fourth indication information is used to indicate that the second information is available to the terminal; and
a seventh receiving module, configured to receive a second request message sent by the network side device, where the second request message is used to request the terminal to send the second information.

The error handling apparatus 30 in this embodiment of this application may be an electronic device, for example, an electronic device with an operating system, or may be a component in an electronic device, for example, an integrated circuit or a chip. The electronic device may be a terminal, or may be another device different from a terminal. For example, the terminal may include but is not limited to the foregoing listed types of the terminal 11. The another device may be a server, a network attached storage (Network Attached Storage, NAS), or the like. This is not specifically limited in this embodiment of this application.

The error handling apparatus 30 provided in this embodiment of this application can implement the processes implemented in the method embodiment of FIG. 2, and achieve same technical effects. To avoid repetition, details are not described herein again.

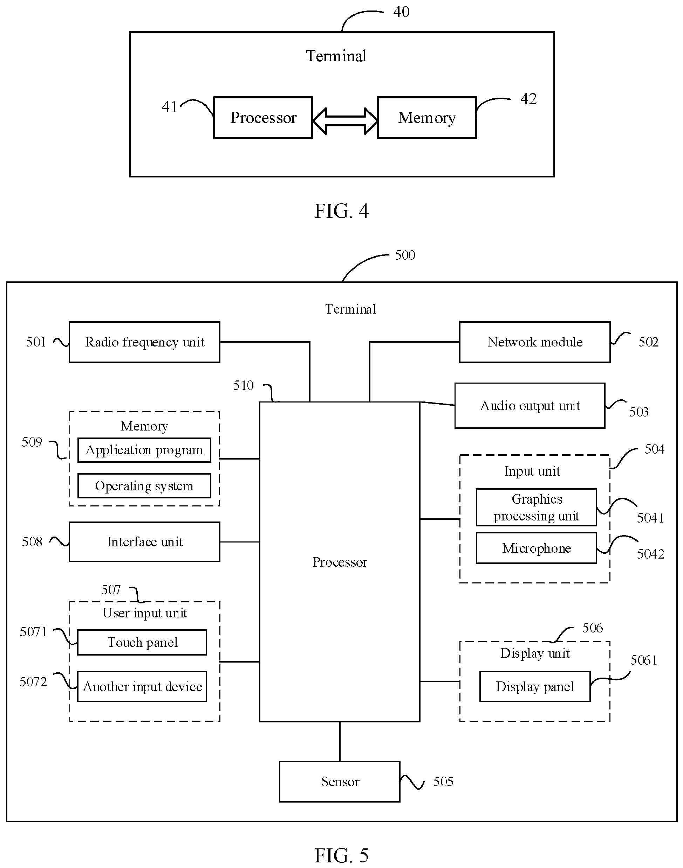

As shown in FIG. 4, an embodiment of this application further provides a terminal 40, including a processor 41 and a memory 42. The memory 42 stores a program or instructions capable of running on the processor 41. The program or the instructions are executed by the processor 41 to implement the steps in the foregoing embodiment of the error handling method, and same technical effects can be achieved. To avoid repetition, details are not described herein again.

An embodiment of this application further provides a terminal, including a processor and a communication interface. The communication interface is coupled to the processor. The processor is configured to run a program or instructions to implement the steps in the method embodiment shown in FIG. 2. The terminal embodiment corresponds to the foregoing terminal-side method embodiment. Each implementation process and implementation of the foregoing method embodiment may be applied to the terminal embodiment, and same technical effects can be achieved.

Specifically, FIG. 5 is a schematic diagram of a hardware structure of a terminal for implementing an embodiment of this application.

The terminal 500 includes but is not limited to at least some components in a radio frequency unit 501, a network module 502, an audio output unit 503, an input unit 504, a sensor 505, a display unit 506, a user input unit 507, an interface unit 508, a memory 509, and a processor 510.

A person skilled in the art may understand that the terminal 500 may further include a power supply (for example, a battery) that supplies power to each component. The power supply may be logically connected to the processor 510 by using a power management system, to implement functions such as charging management, discharging management, and power consumption management through the power management system. The structure of the terminal shown in FIG. 5 does not constitute a limitation on the terminal. The terminal may include more or fewer components than those shown in the figure, or combine some components, or have different component arrangements. Details are not described herein again.

It should be understood that in this embodiment of this application, the input unit 504 may include a graphics processing unit (Graphics Processing Unit, GPU) 5041 and a microphone 5042. The graphics processing unit 5041 processes image data of a still picture or a video obtained by an image capture apparatus (for example, a camera) in a video capture mode or an image capture mode. The display unit 506 may include a display panel 5061, and the display panel 5061 may be configured in a form of a liquid crystal display, an organic light-emitting diode, or the like. The user input unit 507 includes at least one of a touch panel 5071 and another input device 5072. The touch panel 5071 is also referred to as a touchscreen. The touch panel 5071 may include two parts: a touch detection apparatus and a touch controller. The another input device 5072 may include but is not limited to a physical keyboard, a function key (such as a volume control key or an on/off key), a trackball, a mouse, and a joystick. Details are not described herein again.

In this embodiment of this application, after receiving downlink data from a network side device, the radio frequency unit 501 may transmit the downlink data to the processor 510 for processing. In addition, the radio frequency unit 501 may send uplink data to the network side device. Generally, the radio frequency unit 501 includes but is not limited to an antenna, an amplifier, a transceiver, a coupler, a low-noise amplifier, a duplexer, and the like.

The memory 509 may be configured to store a software program or instructions and various types of data. The memory 509 may mainly include a first storage area for storing a program or instructions and a second storage area for storing data. The first storage area may store an operating system, an application program or instructions required by at least one function (for example, a sound play function or an image play function), and the like. In addition, the memory 509 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 509 in this embodiment of this application includes but is not limited to these memories and any other suitable type of memory.

The processor 510 may include one or more processing units. Optionally, the processor 510 integrates an application processor and a modem processor. The application processor mainly processes operations related to an operating system, a user interface, an application program, and the like. The modem processor mainly processes a wireless communication signal, such as a baseband processor. It may be understood that, the foregoing modem processor may not be integrated into the processor 510.

The radio frequency unit 501 is configured to receive a MAC PDU or a PDCCH.

The processor 510 is configured to perform a first operation in a case that a first MAC CE in a first MAC sub-PDU of the MAC PDU includes first content, or perform a second operation in a case that the PDCCH carries second content. The first content includes at least one of the following: incorrect content, unconfigured content, undefined content, and invalid content. The first operation includes at least one of the following: a third operation, where the third operation includes at least one of the following: ignoring a behavior indicated by or associated with the first MAC CE, performing a part of behaviors indicated by or associated with the first MAC CE, and a discarding operation related to the first MAC sub-PDU; and sending first information to a network side device, where the first information includes at least one of the following: measurement-related information and error information. The second content includes at least one of the following: incorrect content, unconfigured content, undefined content, and invalid content. The second operation includes at least one of the following: ignoring a behavior indicated by or associated with the PDCCH; and sending second information to the network side device, where the second information includes at least one of the following: measurement-related information and error information.

It may be understood that for implementation processes of the implementations mentioned in this embodiment, refer to related descriptions in the method embodiment, and a same or corresponding technical effect is achieved. To avoid repetition, details are not described herein again.

An embodiment of this application further provides a readable storage medium. The readable storage medium stores a program or instructions. The program or the instructions are executed by a processor to implement the processes in the embodiments of the foregoing error handling method, and same technical effects can be achieved. To avoid repetition, details are not described herein again.

The processor is a processor in the terminal described in the foregoing embodiments. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or instructions to implement processes in the embodiments of the foregoing error handling method, and same technical effects can be achieved. To avoid repetition, details are not described herein again.

It should be understood that the chip mentioned in this embodiment of this application can also be referred to as a system-level chip, a system chip, a chip system, a system on chip, or the like.

An embodiment of this application further provides a computer program/program product. The computer program/program product is stored in a storage medium. The computer program/program product is executed by at least one processor to implement processes in the embodiments of the foregoing error handling method, and same technical effects can be achieved. To avoid repetition, details are not described herein again.

An embodiment of this application further provides a communication system, including a terminal and a network side device. The terminal may be configured to perform the steps of the foregoing error handling method, and a same technical effect can be achieved. To avoid repetition, details are not described herein again.

It should be noted that in this specification, the term "comprise", "include", or any of their variants is intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more limitations, an element preceded by "includes a ..." does not preclude the existence of additional identical elements in the process, method, article, or apparatus that includes the element. In addition, it should be noted that the scope of the method and apparatus in the implementations of this application is not limited to performing functions in a sequence shown or discussed, and may further include performing functions in a basically simultaneous manner or in a reverse sequence based on related functions. For example, the described method may be performed in an order different from the described order, and various steps may be added, omitted, or combined. In addition, features described with reference to some examples may be combined in other examples.

According to the foregoing descriptions of the implementations, a person skilled in the art may clearly understand that the method in the foregoing embodiments may be implemented by a computer software product and a necessary general-purpose hardware platform, or certainly may be implemented by hardware. The computer software product is stored in a storage medium (such as a ROM, a RAM, a magnetic disk, or an optical disc) and includes several instructions for instructing a terminal or a network side device to perform the method described in the embodiments of this application.

The foregoing describes the embodiments of this application with reference to the accompanying drawings. However, this application is not limited to the foregoing specific implementations. The foregoing specific implementations are merely illustrative rather than restrictive. Inspired by this application, a person of ordinary skill in the art may develop many forms of implementations without departing from principles of this application and the protection scope of the claims, and all such implementations fall within the protection scope of this application.

## Claims

1. An error handling method, comprising:
receiving, by a terminal, a medium access control MAC protocol data unit PDU or a physical downlink control channel PDCCH; and
performing, by the terminal, a first operation in a case that a first MAC control element CE in a first MAC sub-PDU of the MAC PDU comprises first content; or performing a second operation in a case that the PDCCH carries second content, wherein
the first content comprises at least one of the following: incorrect content, unconfigured content, undefined content, and invalid content, and the first operation comprises at least one of the following:
a third operation, wherein the third operation comprises at least one of the following: ignoring a behavior indicated by or associated with the first MAC CE, performing a part of behaviors indicated by or associated with the first MAC CE, and a discarding operation related to the first MAC sub-PDU; or
sending first information to a network side device, wherein the first information comprises at least one of the following: measurement-related information and error information; and
the second content comprises at least one of the following: incorrect content, unconfigured content, undefined content, and invalid content, and the second operation comprises at least one of the following:
ignoring a behavior indicated by or associated with the PDCCH; and
sending second information to the network side device, wherein the second information comprises at least one of the following: measurement-related information and error information.

2. The method according to claim 1, wherein the performing, by the terminal, a first operation comprises at least one of the following:
performing, by a MAC entity of the terminal, the third operation; and
performing, by a radio resource control RRC entity of the terminal, the third operation.

3. The method according to claim 2, wherein the method further comprises:
receiving, by the terminal, first indication information, wherein the first indication information is used to instruct the MAC entity of the terminal to perform the third operation in a case that the first MAC CE carries the first content; and
the performing, by a MAC entity of the terminal, the third operation comprises:
performing, by the MAC entity of the terminal, the third operation based on the first indication information.

4. The method according to claim 2, wherein the performing, by a MAC entity of the terminal, the third operation comprises:
performing, by the MAC entity of the terminal, the third operation based on whether the first MAC CE is from a primary cell group or a primary secondary cell group.

5. The method according to claim 2, wherein the method further comprises:
receiving, by the MAC entity of the terminal, first acknowledgement information sent by the RRC entity of the terminal, wherein the first acknowledgement information is determined by the RRC entity by identifying the first content; and
the performing, by a MAC entity of the terminal, the third operation comprises:
performing, by the MAC entity of the terminal, the third operation based on the first acknowledgement information.

6. The method according to claim 5, wherein the method further comprises: sending, by the MAC entity of the terminal, content that is in the first MAC CE and that is related to a behavior of the RRC entity to the RRC entity of the terminal.

7. The method according to claim 2, wherein in a case that the MAC entity of the terminal performs the third operation, the method further comprises:
receiving, by the MAC entity of the terminal, third information associated with the first MAC CE from the RRC entity of the terminal, wherein the third information is used to indicate, to the MAC entity, information that is associated with the first MAC CE and that is stored in the terminal.

8. The method according to any one of claims 1 to 7, wherein the method further comprises:
receiving, by the MAC entity of the terminal, second acknowledgement information sent by the RRC entity of the terminal, wherein the second acknowledgement information is obtained by the RRC entity by identifying third content sent by the MAC entity, and is used to indicate that content carried by a second MAC CE in the MAC PDU is correct or instruct the terminal to perform a behavior indicated by or associated with the second MAC CE, and the third content is content that is in the second MAC CE and that is related to a behavior of the RRC entity; and performing, by the MAC entity of the terminal based on the second acknowledgement information, the behavior indicated by or associated with the second MAC CE.

9. The method according to claim 8, wherein in a case that the second acknowledgement information instructs the terminal to perform the behavior indicated by or associated with the second MAC CE, the second acknowledgement information is used to instruct the MAC entity to perform one or more of the following: performing a MAC reset, applying a timing advance indicated in the second MAC CE, or indicating beam information indicated in the second MAC CE to a lower layer.

10. The method according to claim 8 or 9, wherein the performing, by the MAC entity of the terminal based on the second acknowledgement information, the behavior indicated by or associated with the second MAC CE comprises: performing, by the MAC entity, one or more of the following:
performing the MAC reset;
applying the timing advance indicated in the second MAC CE; or
indicating the beam information indicated in the second MAC CE to the lower layer.

11. The method according to claim 2, wherein in a case that the RRC entity of the terminal performs the third operation, the method further comprises:
sending, by the RRC entity of the terminal, first acknowledgement information to the MAC entity of the terminal, wherein the first acknowledgement information is determined by the RRC entity by identifying the first content, and is used to assist the MAC entity in performing the third operation.

12. The method according to claim 5 or 11, wherein the first acknowledgement information is used for at least one of the following:
indicating that the first content is at least one of the following: incorrect content, partially incorrect content, unconfigured content, undefined content, and invalid content; and
instructing the MAC entity to perform at least one of the following: ignoring a behavior indicated by or associated with the first MAC CE, and performing a part of behaviors indicated by or associated with the first MAC CE.

13. The method according to claim 2, wherein the method further comprises:
receiving, by the terminal, second indication information, wherein the second indication information is used to instruct the RRC entity of the terminal to perform the third operation in a case that the first MAC CE carries the first content; and
the performing, by a radio resource control RRC entity of the terminal, the third operation comprises:
performing, by the RRC entity of the terminal, the third operation based on the second indication information.

14. The method according to claim 2, wherein the performing, by a radio resource control RRC entity of the terminal, the third operation comprises:
performing, by the RRC entity of the terminal, the third operation based on whether the first MAC CE is from a primary cell group or a primary secondary cell group.

15. The method according to any one of claims 1 to 14, wherein the performing, by the terminal, a first operation comprises:
in a case that the terminal is in a dual-connected state, and the first MAC CE is from a secondary cell group, ignoring, by the terminal, the behavior indicated by or associated with the first MAC CE, and reporting configuration error information of the secondary cell group to a network side device of a serving cell.

16. The method according to claim 1, wherein in a case that an RRC entity of the terminal performs the first operation, the method further comprises at least one of the following:
continuing, by the terminal, to use an RRC configuration received before receiving the first MAC CE, and performing at least one of the following: RRC connection re-establishment, RRC connection resume, fast recovery of layer 1/layer 2 triggered cell switching, and falling back to an RRC idle state; and
reporting, by the terminal, configuration error information of a secondary cell group to a network side device of a serving cell after ignoring the behavior indicated by or associated with the first MAC CE.

17. The method according to claim 1, wherein the sending first information to a network side device comprises any one of the following:
sending, by the terminal, the first information to a network side device of a serving cell in which the terminal is located; and
sending, by the terminal, the first information to a network side device of a new serving cell after RRC connection re-establishment or fast recovery of layer 1/layer 2 triggered cell switching.

18. The method according to claim 1, wherein the discarding operation related to the first MAC sub-PDU comprises at least one of the following:
discarding at least the first MAC sub-PDU;
discarding at least the first MAC sub-PDU and a sub-PDU located after the first MAC sub-PDU in the MAC PDU; and
discarding the MAC PDU.

19. The method according to claim 1 or 17, wherein the first information is used for at least one of the following:
indicating that the terminal receives an incorrect MAC CE;
indicating that the terminal is not capable of parsing the first MAC CE;
indicating that at least one of the first MAC CE, the first MAC sub-PDU, and the MAC PDU comprises at least one of the following: incorrect content, unconfigured content, undefined content, and invalid content;
indicating that the terminal is not capable of correctly parsing at least one of the following: the first MAC sub-PDU and the MAC PDU;
requesting for the terminal at least one of the following: a new first MAC CE, a new first MAC sub-PDU, and a new MAC PDU;
indicating that the terminal is not capable of applying an RRC configuration indicated by or associated with the first MAC CE, or indicating that the terminal does not have an RRC configuration indicated by or associated with the first MAC CE; and
indicating that content carried by the first MAC CE is at least one of the following: incorrect content, unconfigured content, undefined content, and invalid content.

20. The method according to claim 1, 17, or 19, wherein the method further comprises:
sending, by the terminal, third indication information to the network side device, wherein the third indication information is used to indicate that the first information is available to the terminal; and
receiving, by the terminal, a first request message sent by the network side device, wherein the first request message is used to request the terminal to send the first information.

21. The method according to claim 1, wherein the second information is used for at least one of the following:
indicating that the terminal is not capable of parsing content carried by the PDCCH;
indicating that the PDCCH carries at least one of the following: incorrect content, unconfigured content, undefined content, and invalid content; and
requesting a new PDCCH for the terminal.

22. The method according to claim 1 or 21, wherein the method further comprises:
sending, by the terminal, fourth indication information to the network side device, wherein the fourth indication information is used to indicate that the second information is available to the terminal; and
receiving, by the terminal, a second request message sent by the network side device, wherein the second request message is used to request the terminal to send the second information.

23. An error handling apparatus, comprising:
a first receiving module, configured to receive a MAC PDU or a PDCCH; and
an execution module, configured to perform a first operation in a case that a first MAC CE in a first MAC sub-PDU of the MAC PDU comprises first content, or perform a second operation in a case that the PDCCH carries second content, wherein
the first content comprises at least one of the following: incorrect content, unconfigured content, undefined content, and invalid content, and the first operation comprises at least one of the following:
a third operation, wherein the third operation comprises at least one of the following: ignoring a behavior indicated by or associated with the first MAC CE, performing a part of behaviors indicated by or associated with the first MAC CE, and a discarding operation related to the first MAC sub-PDU; or
sending first information to a network side device, wherein the first information comprises at least one of the following: measurement-related information and error information; and
the second content comprises at least one of the following: incorrect content, unconfigured content, undefined content, and invalid content, and the second operation comprises at least one of the following:
ignoring a behavior indicated by or associated with the PDCCH; and
sending second information to the network side device, wherein the second information comprises at least one of the following: measurement-related information and error information.

24. A terminal, comprising a processor and a memory, wherein the memory stores a program or instructions capable of running on the processor, and the program or instructions are executed by the processor to implement the steps of the error handling method according to any one of claims 1 to 22.

25. A readable storage medium, wherein the readable storage medium stores a program or instructions, and the program or instructions are executed by a processor to implement the steps of the error handling method according to any one of claims 1 to 22.
